# EUROPÄISCHE PATENTSCHRIFT

(11) **EP 1 229 207 B1**
(45) Veröffentlichungstag und Bekanntmachung des Hinweises auf die Patenterteilung: **13.10.2010**
(21) Anmeldenummer: 02000585.6
(22) Anmeldetag: 10.01.2002
(51) Int. Cl.: H02G 3/22, E05D 11/00, E06B 3/263

(54) **Profilanordnung**
Profile configuration
Arrangement de profilés

(30) Priorität: 15.01.2001 DE 20100757 U
(43) Veröffentlichungstag der Anmeldung: 07.08.2002
(73) Patentinhaber: SCHÜCO International KG, 33609 Bielefeld (DE)
(72) Erfinder: Pigorsch, Willi, 34117 Kassel (DE); Kupfer, Mathias, 33719 Bielefeld (DE)
(74) Vertreter: Dantz, Jan Henning

(56) Entgegenhaltungen:
- DE-A- 3 105 311
- FR-A- 2 641 820
- US-A- 4 278 834
- US-A- 5 135 413

## Beschreibung

Die vorliegende Erfindung betrifft eine Profilanordnung, insbesondere für elektrisch betriebene Fenster, Türen, Fassaden, Lichtdachkonstruktionen oder dergleichen, mit einem Profil, in dem zumindest ein Hohlraum ausgebildet ist, in dem ein Kabel geführt ist, das an einer Öffnung aus dem Profil tritt.

Es sind bereits Fenster- und Türelemente bekannt, bei denen elektrische Komponenten eingesetzt werden, um beispielsweise Fenster bzw. Türen zu kippen oder zu drehen. Ferner werden Sensoren angebracht, um die jeweilige Stellung der Fenster, Türen oder anderer Elemente abzutasten. Zudem werden elektrische Bauteile in Form von Sensoren, beispielsweise als Einbruchmelder eingesetzt. Bei allen Konstruktionen müssen die jeweiligen Elemente mit Elektrizität versorgt und folglich verkabelt werden.

Die Kabelführung erweist sich oft als schwierig und es ist wünschenswert, die Kabel innerhalb eines Profils in einem entsprechenden Hohlraum zu führen. Das Kabel tritt dann an einer Öffnung aus dem Blend- oder Flügelrahmen heraus, um ein Element elektrisch zu versorgen. Einerseits ist dabei problematisch, dass ein lose aus einer Öffnung heraustretendes Kabel durch scharfkantige Öffnungen beschädigt werden kann und dass ein offenliegendes Kabel eine Gefahrenquelle darstellt. Die Kabelführung gestaltet sich zudem schwierig, weil nicht alle Bereiche eines Hohlprofils für die Kabelführung verwendet werden können, da diese Eckverbindern, Verankerungen oder anderen Bauteilen vorbehalten ist. Darüber hinaus kommt der wesentliche Nachteil zum Tragen, dass für die elektrischen Arbeiten in der Regel ein Fachmann herangezogen wird, der sich mit den Profilen bzw. den Profilsystemen nicht auskennt. Auf der anderen Seite wird für die Metallbauarbeiten ein weiterer Fachmann eingesetzt, der Schwierigkeiten hat, elektrische Arbeiten auszuführen, da dieser Fachmann mit dem Handwerk des Elektrikers nicht vertraut ist. Hier stoßen also zwei Gewerbe aufeinander.

Die DE 31 05 311 offenbart einen flexiblen Kabelkanal zum Führen eines Kabels von einem Türrahmen zu einer mit diesem verbundenen Tür.

Die FR 2 641 820 offenbart ein Zargenprofil eines Türrahmens, mit einem flexiblen Kabelkanal zum Führen eines Kabels einer elektrischen Schließvorrichtung, die von einer Tür zu dem Türrahmen führt.

Es ist daher Aufgabe der vorliegenden Erfindung eine Profilanordnung der eingangs genannten Art zu schaffen, bei der die elektrische Versorgung auf einfache Weise erfolgt und bei der eine definierte Kabelführung vorgesehen ist, die leicht zu montieren ist.

Diese Aufgabe wird mit einer Profilanordnung mit den Merkmalen des Anspruches 1 gelöst.

Wenn die Profilanordnung an der Öffnung, durch die das Kabel austritt, ein Führungselement zur Umlenkung des Kabels aufweist, kann das Kabel geschützt aus der Profilanordnung zu dem elektrischen Abnahmeelement geführt werden. Die Kabelführung kann dabei schon bei der Montage des Profils erfolgen, so dass die Montagearbeiten von dem Metallbauer ausgeführt werden können, der dann die Profilanordnung schon mit den gewünschten Kabeln versorgen kann. Durch das Führungselement ist das Kabel vorfixiert und braucht lediglich noch angeschlossen zu werden. Durch die Umlenkung in dem Führungselement werden auch zusätzliche Bearbeitungen am Profil überflüssig, beispielsweise müssen keine Nutwände abgefräst werden, da die Führung des Kabels von dem Führungselement übernommen wird.

Dabei weist das Führungselement einen Kanal auf, der das Kabel zumindest bereichsweise U-förmig umgreift. Dadurch ist das Kabel durch das Führungselement geschützt angeordnet, insbesondere wenn der offene Bereich des U-förmigen Kanals zu dem Profil selbst gewandt ist, so dass das Kabel unverlierbar zwischen Führungselement und Profil aufgenommen ist.

Für eine einfache Montage des Führungselementes ist dieses vorzugsweise mit dem Profil verrastet.

Gemäß einer bevorzugten Ausführungsform weist das Führungselement einen Zapfen mit einer Ausnehmung zur Aufnahme des Kabels auf, der die Öffnung an dem Profil durchgreift. Die Öffnung in dem Profil ist meist noch mit scharfen Kanten versehen, die nicht nachbearbeitet wurden. Diese Kanten können das Kabel beschädigen. Wenn der Zapfen die Öffnung durchgreift und in dem Zapfen das Kabel geführt ist, wird ein Kontakt zwischen Kabel und den Kanten der Öffnung vermieden, so dass hier keine Gefahr von Beschädigungen mehr besteht.

Vorzugsweise sind an dem Führungselement Stege angeformt, die in Nuten des Profils eingreifen. Um einen sicheren Halt zu gewährleisten, können an den Stegen Vorsprünge angeformt sein, die mit einer hinterschnittenen Nut an dem Profil verrastbar sind.

Gemäß einer bevorzugten Ausführungsform der Erfindung verläuft der Kanal ausgehend von der Öffnung in dem Profil etwa rechtwinklig gekrümmt, wobei an einem endseitigen Steg des Führungselementes eine Durchtrittsöffnung vorgesehen ist. Das Führungselement besitzt eine Brückenfunktion, um das Kabel von der Öffnung geschützt zu einer weiteren Position an dem Profil zu führen. Da die Einsatzzwecke des Führungselementes verschieden sein können, ist es vorteilhaft, wenn mindestens ein weiterer Abzweigkanal zur Aufnahme des Kabels in dem Führungselement vorgesehen ist, der sich im wesentlichen senkrecht zu dem Kanal erstreckt. Dadurch kann das Kabel bei Bedarf auch in den Abzweigkanal eingelegt werden.

Um das Führungselement gleichzeitig auch als Sensor einsetzen zu können, kann in dem Führungselement ein Reed-Kontakt, ein Magnetschalter oder anderer Sensor integriert sein. Dabei ist das Führungselement teilweise mit einer Vergußmasse ausgefüllt, um den Sensor aufzunehmen. Diese Vergußmasse gibt dem Gehäuse Stabilität und ermöglicht eine einfache Montage des Sensors an dem Profil.

Das Führungselement besteht vorzugsweise aus Kunststoff. Auch andere Werkstoffe, z.B. Zinkdruckguss sind möglich.

Die Erfindung wird nachfolgend anhand eines Ausführungsbeispieles mit Bezug auf die beigefügten Zeichnungen näher erläutert. Es zeigen:
- Figur 1: eine Querschnittsansicht einer Profilanordnung für ein Fenster;
- Figur 2: eine Querschnittsansicht einer Profilanordnung mit einem erfindungsge- mäßen Führungselement;
- Figur 3: eine Seitenansicht des Führungselementes der Figur 2 und
- Figur 4: eine Unteransicht des Führungselementes der Figur 3.

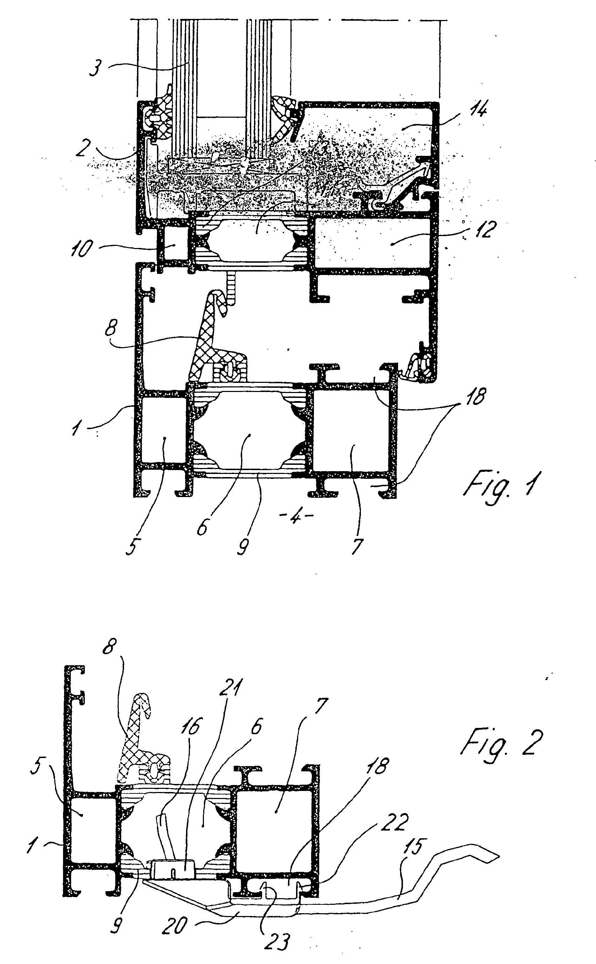

In Figur 1 ist ein Schnitt durch ein Aluminium-Hohlprofil-Fenster gezeigt. Das Fenster umfasst einen ortsfesten Blendrahmen 1 und einen beweglichen Flügelrahmen 2, in dem eine Füllungsplatte, beispielsweise eine Isolierglasscheibe 3 eingesetzt ist. Benachbart zu dem Blendrahmen 1 ist eine Wandanschlußseite 4 vorgesehen, um den Blendrahmen 1 zu befestigen. Üblicherweise werden an der Wandanschlußseite 4 Kabel in das Hohlprofil des Rahmens eingeführt. In dem dargestellten Ausführungsbeispiel ist der Blendrahmen 1 und der Flügelrahmen 2 als wärmegedämmtes Aluminiumprofil ausgeführt. Es ist auch möglich andere Profile, beispielsweise aus Kunststoff oder Holz einzusetzen.

Das Blendrahmenprofil 1 umfasst Hohlkammern 5, 6 und 7, wobei die Hohlkammer 6 zwischen zwei Isolierstegen 9 ausgebildet ist. An dem zu dem Flügelrahmen 2 gewandten Isoliersteg 9 ist ein Dichtungsprofil 8 angeordnet.

Auf ähnliche Weise verfügt das Flügelrahmenprofil 2 über Hohlräume 10, 11 und 12 wobei der mittlere Hohlraum 11 zwischen zwei Isolierstegen 13 ausgebildet ist. Ferner ist an dem Flügelrahmenprofil 2 ein Hohlraum 14 im Bereich des Glasfalzes gebildet. In diesen Hohlräumen 5, 6, 7, 10, 11, 12, und 14 können Kabel sowie kleine elektrische Bauteile montiert werden.

Wie in Figur 2 ersichtlich ist, ist an dem Blendrahmenprofil 1 ein Kabel 15 geführt, das mit einem Abschnitt 16 in den Hohlraum 6 zwischen den Isolierstegen 9 verläuft. Es ist auch möglich, das Führungselement 20 an einer anderen Stelle des Blendrahmenprofils 1 anzubringen, um einen anderen Hohlraum zur Kabelführung einzusetzen. Das Führungselement 20 greift mit einem Zapfen 21 durch eine in dem Isoliersteg 9 gebildete Öffnung ein und ist an dem Isoliersteg 9 verrastet. Zusätzlich sind an dem Führungselement Stege 22 und 23 mit einem Vorsprung ausgebildet, die in eine hinterschnittene Nut 18 an dem Blendrahmenprofil 1 greifen. Dadurch ist das Führungselement sowohl an der hinterschnittenen Nut 18 als auch an der Öffnung in den Isoliersteg 9 verrastet.

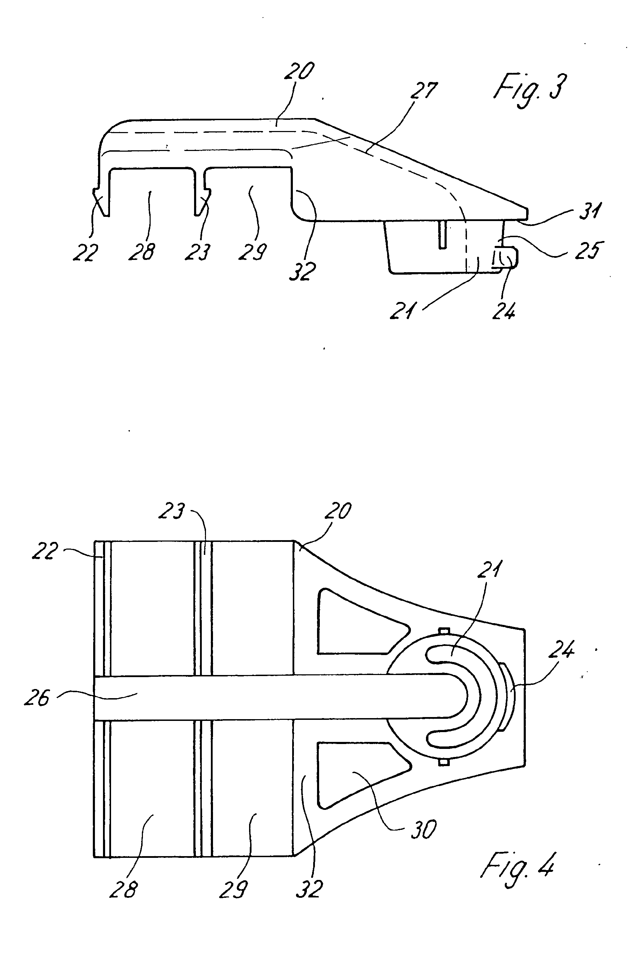

In den Figuren 3 und 4 ist das Führungselement 20 vor der Montage dargestellt. Das Führungselement 20 umfasst einen Kanal 26 der ein eingelegtes Kabel 15 U-förmig umgreift, so dass dieses vor Umgebungseinflüssen geschützt ist. Der Kanal 26 verläuft von dem in dem Isoliersteg 9 einsteckbaren Zapfen 21 bis hin zu dem endseitigen Steg 22, dem eine U-förmige Durchtrittsöffnung ausgespart ist. Die Umlenkung eines Kabels ergibt sich durch die gestrichelte Linie 27 in Figur 3, die die Oberkante des Kanals 26 darstellt.

An dem Zapfen 21 ist ein Vorsprung 24 ausgebildet, so dass zwischen dem Vorsprung 24 und einem Bodenabschnitt 31 des Führungselementes 20 eine Aussparung 25 vorgesehen ist. Die Dicke der Aussparung 25 entspricht etwa der Dicke des Isoliersteges 9, so dass das Führungselement 20 an dem Isoliersteg 9 mittels dem Vorsprung 24 gehalten ist.

Wie aus Figur 4 ersichtlich ist, bildet sich zwischen den Stegen 22 und 23 ein Abzweigkanal 28 aus. Falls das Kabel 15 nicht aus dem Blendrahmenprofil 1 herausgefühl werden soll, kann das Kabel 15 von dem Kanal 26 auch in den Abzweigkanal 28 gelegt werden, um das Kabel 15 so in der hinterschnittenen Nut 18 weiterzuführen. Ferner ist zwischen dem Steg 23 und einer Wand 32 an dem Führungselement 20 ein Abzweigkanal 29 ausgebildet, der ebenfalls zur Kabelführung einsetzbar ist. In diesem Ausführungsbeispiel ist in dem Abzweigkanal 29 allerdings eine Wand der hinterschnittenen Nut 18 aufgenommen. Ferner sind in dem Führungselement 20 noch Hohlräume 30 ausgespart.

Das Führungselement 20 ist aus Kunststoff ausgebildet und kann universell für unterschiedliche Einsatzzwecke genutzt werden. Beispielsweise kann das Führungselement 20 Rastaufnahmen für Sensoren aufweisen. Ebenso kann das Führungselement 20 mit Verstärkungsstreben für mechanische Belastungen ausgerüstet sein.

Durch das Führungselement 20 ist das Kabel 15 vor Umwelteinflüssen geschützt. Ferner läßt sich das Kabel 15 sicher schon bei der Montage des Rahmenprofils oder auch später montieren, wobei mittels des Führungselementes 20 die Positionierung des Kabels 15 erfolgen kann.

Vorzugsweise ist in dem Führungselement 20 gleich ein Reed-Kontakt eingefügt, wobei dieser mit einem Füllmaterial in dem Führungselement gehalten ist. Es ist auch möglich Magnetschalter oder andere Sensoren in dem Führungselement einzufügen.

Ferner kann das Führungselement 20 auch als Stecker ausgebildet sein. Hierfür können an dem Führungselement Öffnungen ausgebildet sein, um einen Steckkontakt oder eine Buchse an dem Führungselement vorzusehen. Es können auch mehrere Steckkontakte oder Buchsen an dem Führungselement vorgesehen sein, die über das Kabel oder mehrere Kabel versorgt werden.

## Patentansprüche

1. Profilanordnung, insbesondere für elektrisch betriebene Fenster, Türen, Fassaden, Lichtdachkonstruktionen oder dergleichen, mit einem Profil (1, 2) in dem zumindest ein Hohlraum (5, 6, 7, 10, 11, 12, 14) ausgebildet ist, in dem ein Kabel (15) geführt ist, das an einer Öffnung aus dem Profil (1, 2) tritt, wobei an der Öffnung ein Führungselement (20) zur Umlenkung des Kabels (15) vorgesehen ist, **dadurch gekennzeichnet, dass** das Führungselement (20) einen Kanal (26) aufweist, der das Kabel (15) zumindest bereichsweise U-förmig umgreift.

2. Profilanordnung nach Anspruch 1, **dadurch gekennzeichnet, dass** das Führungselement (20) mit dem Profil (1) verrastet ist.

3. Profilanordnung nach einem der Ansprüche 1 oder 2, **dadurch gekennzeichnet, dass** das Führungselement (20) einen Zapfen (21) mit einer Ausnehmung zur Aufnahme des Kabels (15) aufweist, der die Öffnung an dem Profil (1) durchgreift.

4. Profilanordnung nach einem der Ansprüche 1 bis 3, **dadurch gekennzeichnet, dass** an dem Führungselement (20) Stege (22, 23) angeformt sind, die in Nuten (18) des Profils eingreifen.

5. Profilanordnung nach Anspruch 4, **dadurch gekennzeichnet, dass** die Stege (22, 23) Vorsprünge aufweisen, die mit einer hinterschnittenen Nut (18) des Profils (1) verrastbar sind.

6. Profilanordnung nach einem der Ansprüche 1 bis 5, **dadurch gekennzeichnet, dass** der Kanal (26) ausgehend von der Öffnung in dem Profil (1) etwa rechtwinklig gekrümmt verläuft und an einem endseitigen Steg (22) des Führungselementes (20) eine Durchtrittsöffnung vorgesehen ist.

7. Profilanordnung nach einem der Ansprüche 1 bis 6, **dadurch gekennzeichnet, dass** mindestens ein weiterer Abzweigkanal (28, 29) zur Aufnahme des Kabels (15) in dem Führungselement (20) vorgesehen ist, der sich im wesentlichen senkrecht zu dem Kanal (26) erstreckt.

8. Profilanordnung nach einem der Ansprüche 1 bis 7, **dadurch gekennzeichnet, dass** in dem Führungselement (20) ein Sensor, vorzugsweise ein Reed-Kontakt integriert ist.

9. Profilanordnung nach einem der Ansprüche 1 bis 8, **dadurch gekennzeichnet, dass** das Führungselement (20) aus Kunststoff besteht.

10. Profilanordnung nach einem der Ansprüche 1 bis 9, **dadurch gekennzeichnet, dass** das Führungselement (20) als Stecker ausgebildet ist.

## Claims

1. Profile arrangement, in particular for electrically operated windows, doors, facades, glazed roof constructions or the like, having a profile (1, 2) in which there is formed at least one cavity (5, 6, 7, 10, 11, 12, 14) in which there is guided a cable (15) which emerges from the profile (1, 2) at an opening, wherein a guide element (20) for deflecting the cable (15) is provided at the opening, **characterized in that** the guide element (20) has a duct (26) which engages around the cable (15) in a U shape at least in certain regions.

2. Profile arrangement according to Claim 1 **characterized in that** the guide element (20) is latched with the profile (1).

3. Profile arrangement according to Claim 1 or 2, **characterized in that** the guide element (20) has a spigot (21) with a cutout for receiving the cable (15), which spigot engages through the opening on the profile (1).

4. Profile arrangement according to one of Claims 1 to 3, **characterized in that** ribs (22, 23) which engage in grooves (18) of the profile are integrally formed on the guide element (20).

5. Profile arrangement according to Claim 4, **characterized in that** the ribs (22, 23) have projections which can be latched with an undercut groove (18) of the profile (1).

6. Profile arrangement according to one of Claims 1 to 5, **characterized in that**, starting from the opening in the profile (1), the duct (26) extends in a curved manner approximately at a right angle and a through opening is provided at a terminal rib (22) of the guide element (20).

7. Profile arrangement according to one of Claims 1 to 6, **characterized in that** at least one further branch duct (28, 29) for receiving the cable (15) is provided in the guide element (20) and extends substantially perpendicularly to the duct (26).

8. Profile arrangement according to one of Claims 1 to 7, **characterized in that** a sensor, preferably a Reed contact, is integrated in the guide element (20).

9. Profile arrangement according to one of Claims 1 to 8, **characterized in that** the guide element (20) is made of plastic.

10. Profile arrangement according to one of Claims 1 to 9, **characterized in that** the guide element (20) is designed as a plug.

## Revendications

1. Arrangement de profilés, destiné en particulier à des fenêtres, portes, façades, constructions de toiture vitrée motorisées ou à des constructions similaires, pourvu d'un profilé (1, 2) dans lequel est formée au moins une cavité (5, 6, 7, 10, 11, 12, 14) dans laquelle est passé un câble (15) qui sort du profilé (1, 2) par une ouverture, un élément de guidage (20) au niveau de l'ouverture étant prévu pour dévier le câble (15), **caractérisé en ce que** l'élément de guidage (20) comporte un canal (26) qui enveloppe le câble (15) au moins dans un secteur en forme de U.

2. Arrangement de profilés selon la revendication 1, **caractérisé en ce que** l'élément de guidage (20) est encliqueté avec le profilé (1).

3. Arrangement de profilés selon l'une quelconque des revendications 1 ou 2, **caractérisé en ce que** l'élément de guidage (20) comporte un tourillon (21) qui est pourvu d'un évidement pour recevoir le câble (15) et qui pénètre dans l'ouverture sur le profilé (1).

4. Arrangement de profilés selon l'une quelconque des revendications 1 à 3, **caractérisé en ce que** des nervures (22, 23), qui s'engagent dans des gorges (18) du profilé, sont formées sur l'élément de guidage (20).

5. Arrangement de profilés selon la revendication 4, **caractérisé en ce que** les nervures (22, 23) comportent des parties en saillie qui peuvent être encliquetées avec une gorge contre-dépouillée (18) du profilé (1).

6. Arrangement de profilés selon l'une quelconque des revendications 1 à 5, **caractérisé en ce que** le canal (26) présente à partir de l'ouverture dans le profilé (1) une forme courbée à peu près à angle droit et **en ce qu'**il est prévu une ouverture débouchante dans une nervure terminale (22) de l'élément de guidage (20).

7. Arrangement de profilés selon l'une quelconque des revendications 1 à 6, **caractérisé en ce qu'**il est prévu au moins un autre canal de dérivation (28, 29) qui est destiné à recevoir le câble (15) dans l'élément de guidage (20) et qui s'étend pratiquement perpendiculairement au canal (26).

8. Arrangement de profilés selon l'une quelconque des revendications 1 à 7, **caractérisé en ce qu'**un capteur, de préférence un contact à lames souples, est intégré dans l'élément de guidage (20).

9. Arrangement de profilés selon l'une quelconque des revendications 1 à 8, **caractérisé en ce que** l'élément de guidage (20) est en matière synthétique.

10. Arrangement de profilés selon l'une quelconque des revendications 1 à 9, **caractérisé en ce que** l'élément de guidage (20) est conçu en tant que connecteur.
